# EUROPÄISCHE PATENTANMELDUNG

(11) **EP 1 632 327 A2**
(43) Veröffentlichungstag der Anmeldung: **08.03.2006**
(21) Anmeldenummer: 05018662.6
(22) Anmeldetag: 27.08.2005
(51) Int. Cl.: B29C 44/32, E04C 2/28, B32B 15/08

(54) **Verfahren und Einrichtung zur Herstellung von Sandwichelementen**

(30) Priorität: 03.09.2004 DE 102004043201
(71) Anmelder: Woitzel, Heinz, 49479 Ibbenbüren (DE); Woitzel, Dirk, 49477 Ibbenbüren (DE)
(72) Erfinder: Woitzel, Heinz, 49479 Ibbenbüren (DE); Woitzel, Dirk, 49477 Ibbenbüren (DE)
(74) Vertreter: Busse & Busse Patentanwälte

(57) **Zusammenfassung**

Bei einem Verfahren zur Herstellung von Sandwichelementen (2) o. dgl. mehrlagiger Bauplatten wird zwischen eine obere (4) und eine untere Deckschicht (5) aus insbesondere gewalztem Blech eine eine Schaumstoff-Zwischenlage bildende Kunststoffreaktionsmasse (8) eingebracht. Das damit mehrlagig geformte Halbzeug wird unter kontinuierlichem Vorschub in eine die Längsrichtung des Verfahrensablaufs vorgebende Doppelplatten-Bandanlage (9) eingeführt. Dabei wird mit den sich verbindenden Lagen ein Sandwich-Band geformt. Von diesem Sandwich-Band kann nach dem Aushärten der Zwischenlage ein die vorgesehene Länge aufweisendes Sandwichelement durch eine Quertrennung abgeteilt werden. Erfindungsgemäß werden in einer vor dem Einbringen der Kunststoffreaktionsmasse (8) in den kontinuierlichen Ablauf integrierten Herstellungsphase jeweilige in einer Querrichtung nacheinander zusammengefügte Blechabschnitte (12,13) oder zumindest zwei in der Längsrichtung fortlaufend zusammengefügte Blechbänder zur kontinuierlichen Bildung der jeweils zwei in Längsrichtung verlagerbaren Deckschichten (4,5) bereitgestellt.

## Beschreibung

Die Erfindung betrifft ein Verfahren zur Herstellung von Sandwichelementen gemäß dem Oberbegriff des Anspruchs 1, eine Einrichtung zur Herstellung derartiger Sandwichelemente gemäß dem Oberbegriff des Anspruchs 12 sowie ein Sandwichele-ment gemäß dem Oberbegriff des Anspruchs 17.

Bei bekannten Verfahren zur Herstellung von Sandwichelementen (GB 2227712 A, DE 1942725, WO 99/00559) werden die von einem Coil abgewickelten oberen und unteren Blechlagen zusammengeführt und im Spaltbereich mit einer isolierenden Kunststoff-Zwischenlage ausgeschäumt, so daß am Ende dieser kontinuierlichen Fertigungsstrecke durch einen quer zur Vorschubrichtung erfolgenden Trennschnitt jeweilige Sandwichelemente mit vorgegebenen Längenabmessungen und nur einer Standard-Breite abtrennbar sind (Firmenprospekt SHS, Siempelkamp Handling Systeme, Wolfratshausen, 2000, Design D).

Bei diesem kontinuierlichen Verfahren werden die jeweils aus Stahlblech bestehenden Blech-Decklagen von einem eine Standard-Breite von ca. 1000 mm bis ca. 1500 mm aufweisenden Vorrats-Coil abgewickelt und mit Abstand in paralleler Übereinanderlage in die Anlage eingefördert. Diese Blechbreiten sind fertigungstechnisch auf diese Abmessungen beschränkt, da eine wirtschaftliche Fertigung von Blech-Coils auf Walzstraßen nur für diese Abmessungen realisiert werden kann und Sonderabmessungen hohe Gestehungskosten verursachen. Bereits bei einem Wechsel der Sandwich-Breite von 1000 mm auf 1500 mm ist ein aufwendiger Wechsel der Vorrats-Coils notwendig.

Bei den auf Standard-Coils basierenden kontinuierlichen Verfahren werden die beiden von jeweiligen Vorratsrollen ablaufenden Deckschichten über eine deren längsorientiertes Querschnittsprofil vorgebende Profilierstation geführt und gelangen danach in eine Blechvorwärmstrecke, der eine die Kunststoffreaktionsmasse zuführende Auftragsvorrichtung nachgeordnet ist. In dieser wird beispielsweise ein Polyurethan-Gemisch zwischen oberer und unterer Deckschicht eingebracht, so daß dieses Gemisch beginnend mit dessen Auftrag, beim nachfolgenden Einlaufen und in der nachgeordneten Doppelplatten-Bandanlage aufschäumen kann. In dieser Doppelplatten-Bandanlage härtet das Polyurethan-Gemisch zwischen den beiden Deckschichten aus und verbindet damit die Lagen dauerhaft zu einem Sandwich-Band. In einer nachfolgenden Sägestation werden durch entsprechende Quertrennung dieses Sandwich-Bandes einzelne Sandwichelemente mit vorgesehener Gebrauchslänge abgetrennt und danach können die einzelnen Elemente weiterbefördert werden.

Für Sandwichelemente größerer Breite ist eine wenig produktive, diskontinuierliche Herstellung vorgesehen. Bei dieser Fertigung der gemäß DE 3010892 C2 und DE 8528630.3 U1 bekannten Art werden jeweilige als Abschnitte von einem Standard-Coil abgetrennte Blechteile als Einzelteile an ihren Längsseitenrändern mit einer Verbindungskontur versehen und in diesen Bereichen durch eine Falz oder dgl. Umformprofile verbunden. Dazu werden die Blechabschnitte in einer die Breite des Sandwich-Endprodukts vorgebenden Länge hergestellt und danach eine die Länge des Endprodukts bestimmende Anzahl der Blechabschnitte aneinandergereiht. Bei dieser Aneinanderreihung werden die Abschnitte durch die Falz verbunden und bilden ein unteres bzw. oberes Lagen-Stück, das in eine untere bzw. obere Aufnahmeform einer Preßvorrichtung eingelegt wird. Danach wird auf eine dieser eingelegten Blechlagen eine flüssige Kunststoffreaktionsmasse aufgetragen und danach wird in der sich unter Zusammenführung der Lagen schließenden Preßvorrichtung ein Sandwichelement einzeln hergestellt. Nach diesem diskontinuierlichen Verfahrensablauf ist an den Längsseitenrändern des aus der Preßvorrichtung entnommenen Sandwichelementes noch ein dessen Länge verändernder Trennschnitt vorgesehen.

Bei diesem diskontinuierlichen Verfahren wird die Kunststoffreaktionsmasse, beispielsweise in Form eines Polyurethan-Gemisches, durch eine flächige Vorverteilung auf die untere Deckschicht aufgetragen oder es erfolgt bei abgesenkter oberer Deck-. schicht eine Injektion in den zwischen den beiden Deckschichten gebildeten Hohlraum, so daß danach mit den sich definiert schließenden Aufnahmeformen der Presse die Dicke des Sandwichelementes vorgegeben wird. Diese diskontinuierliche Verfahrensvariante ist für die Anwendung bei schnell wechselnden Produktabmessungen oder eine anwenderspezifisch variable Gestaltung sowohl von Länge und Breite als auch der Dicke der Sandwichelemente vorgesehen. Außerdem ist diese diskontinuierliche Herstellung vorteilhaft für Deckschichtwerkstoffe oder Farbaufträge aufweisende Sandwichelemente einsetzbar, wobei das Verfahren insgesamt wegen niedriger Produktivität und hohem Personalaufwand in seiner Anwendung begrenzt ist.

Die Erfindung befaßt sich mit dem Problem, ein Verfahren und eine Einrichtung zur Herstellung von Sandwichelementen zu schaffen, womit großflächige Sandwichelemente mit in Länge, Breite und Dicke variierbaren Abmessungen aus Standard-Breite aufweisenden Coil-Blechen in kürzerer Zeit herstellbar sind und dazu der Einsatz einer mit hoher Produktivität weitgehend unterbrechungsfrei automatisch arbeitenden Einrichtung möglich ist.

Die Erfindung löst dieses Problem mit einem Verfahren, einer Einrichtung und einem Element mit den Merkmalen der Ansprüche 1, 12 bzw. 17. Hinsichtlich weiterer Ausgestaltungen des erfindungsgemäßen Verfahrens und der Einrichtung wird auf die Ansprüche 2 bis 11 bzw. 13 bis 16 verwiesen.

Das Verfahren nach der Erfindung schafft auf besonders einfache und kostengünstige Weise erstmals die Möglichkeit, für einen zunehmenden Bedarf an großflächigen Sandwichelementen optimal einsetzbare Fertigungsanlagen zu realisieren, die unter Ausnutzung einer weitgehend ausgereiften Technik mit automatischen Doppelplatten-Bandanlagen auf einer vorteilhaft veränderten kontinuierlichen Verfahrensführung basieren. Mit dem neuen Verfahren wird der Nachteil geringer Produktivität der bekannten diskontinuierlichen Preßtechnik-Herstellung überwunden und die Vorteile der kontinuierlichen Herstellungstechnik werden übernommen, so daß bei erhöhter Variabilität bei der Gestaltung der Sandwichelemente mit minimalem Personalaufwand ein produktive Groß- und Sonderplattenfertigung möglich ist.

Bei dem erfindungsgemäßen kontinuierlichen Verfahren und der zugehörigen Einrichtung ist vorgesehen, daß in einer vor der Doppelplatten-Bandanlage in den Verfahrensablauf integrierten Phase an Stelle der bisherigen direkten Coil-Blech-Zuführung jeweilige Blechabschnitte oder zumindest jeweils zwei Blechbänder zur Bildung der beiden Deckschichten zugeführt und zusammengefügt und danach diese beiden Deckschichten in Übereinanderlage weiterbewegt werden. Dazu werden die Deckschichten mit einer gegenüber den Standardabmessungen von Coil-Blechen vergrößerten Sandwich-Breite kontinuierlich erzeugt und synchron in die Anlage eingeführt, der Zwischenraum ausgeschäumt, diese Lagen ausgehärtet verbunden und erst danach wird aus dem in seiner Breite kundenspezifisch ausführbaren Sandwich-Band das Sandwichelement in vorgesehener Länge sowie weitgehend abfallfrei durch den an sich bekannten Trennschnitt erzeugt.

Bei dem in der vorgelagerten Vorbereitungsphase jeweilige Blechabschnitte verwendenden Verfahrensablauf werden an sich bekannte Vorrats-Coils eingesetzt, von denen Blechbänder abrollen und durch eine Säge oder dgl. auf die entsprechend der vorgesehenen Sandwich-Breite dimensionierte Länge abgetrennt werden. Diese Blechabschnitte sind dazu im Bereich ihrer Längsränder mit einer von formschlüssig zusammenfügbaren Bördelfalzen gebildeten Verbindungsprofilierung versehen. Die so vorbereiteten Blechabschnitte werden dann bei ihrer in Querrichtung erfolgenden Verlagerung in die Fertigungsanlage vor dem Bereich der Doppelplatten-Bandanlage kontinuierlich so verbunden, daß danach die eine Verkettung der Blechabschnitte aufweisenden Deckschichten in der Fertigungsrichtung entsprechender Längsrichtung in die Doppelplatten-Bandanlage vorschiebbar sind.

Diese kontinuierliche Verkettung der Blechabschnitte nach Art eines Zuführstrangs durch jeweiliges Verbinden der profilierten Seitenränder erfolgt zweckmäßig sowohl im Bereich der oberen als auch der unteren Deckschicht. Im weiteren Verfahrensablauf werden die beiden strangförmig verketteten Deckschichten einer Vorwärmung zugeführt, danach zwischen die beiden Deckschichten die Kunststoffreaktionsmasse eingebracht und das danach mehrlagige Halbzeug unter kontinuierlichem Vorschub in Längsrichtung in die Doppelplatten-Bandanlage eingeführt.

Nach dem Aushärten des Kunststoffes in dieser Formstrecke werden aus dem kontinuierlich vorlaufenden Sandwich-Band jeweilige Sandwichelemente durch Quertrennung erzeugt, so daß diese gebrauchsfertigen Elemente entsprechend ihren Breiten- und Längenabmessungen eine großflächige Kontur aufweisen, die insbesondere über die Standard-Abmessungen bekannter kontinuierlicher Fertigungsanlagen hinausgehen, da diese nur Standard-Coils bis zu einer Breite von ca. 1,5 m verarbeiten können. Durch entsprechende Vorgaben für die Arbeitsparameter der Anlage können mit dem neuen Verfahren jeweilige in ihrer Breite, Länge und Dicke gebrauchsfertige Großelemente kontinuierlich aus unterschiedlichen Werkstoffkombinationen, mit unterschiedlichen Farbvarianten und Profilierungen im Bereich der Deckschichten hergestellt werden. Bei einem Wechsel der Sandwich-Breite kann die Anlage schnell umgerüstet werden und dabei ohne einen Coil-Wechsel weiterbetrieben werden, so daß durch das konstante Abmessungen aufweisende Coil-Blech geringere Lagerkapazität erforderlich ist und die Gestehungskosten insgesamt verringert sind.

Bei einer zweiten Verfahrensvariante werden in Längsrichtung jeweilige parallel in Längsrichtung der Anlage zugeführte Blechbänder kontinuierlich vor der Doppelplatten-Bandanlage verbunden, so daß damit ebenfalls in einem unterbrechungsfreiem Verfahrensablauf ein in der Breite durch die jeweiligen Abmessungen der zumindest zwei Blechbänder variierbares Sandwich-Band erzeugt wird und von diesem die einzelnen Sandwichelemente vorgesehener Länge als Großflächen-Elemente abgetrennt werden.

Weitere Einzelheiten der Erfindung sind in der nachfolgenden Beschreibung in Verbindung mit den Zeichnungen, die zwei Ausführungsbeispiele einer Einrichtung zur Durchführung des erfindungsgemäßen Verfahrens schematisch veranschaulichen, näher erläutert. In der Zeichnung zeigen:
- Fig. 1: eine vergrößerte Ausschnittsdarstellung im Bereich einer Blechabschnitte verarbeitenden Doppelplatten-Bandanlage, hinter einer eine obere und eine untere Deckschicht aus gewalzten Stahlblechen aufnehmenden Vorwärmstation und anschließendem Reaktionsgemischauftrag,
- Fig. 2: eine Querschnittsdarstellung eines am Ende der Anlage erzeugten Sandwichelementes gemäß einer Linie II-II in Fig. 1,
- Fig. 3: eine Querschnittsdarstellung gemäß einer Linie lll-lll in Fig. 1,
- Fig. 4: eine vergrößerte Darstellung einer zweiten Ausführung der erfindungsgemäßen Herstellung von Sandwichelementen ähnlich Fig.1, mit jeweils aus mehreren parallel zugeführten Blechbändern geformter oberer und unterer Deckschicht,
- Fig. 5: eine Querschnittsdarstellung gemäß einer Linie IV-IV in Fig. 4,
- Fig. 6: eine teilweise geschnittene Seitenansicht einer Doppelplatten-Bandanlage, mit einem vor dieser die beiden Deckschichten bereitstellenden Förderanlage,
- Fig. 7: eine Draufsicht auf die Doppelplatten-Bandanlage gemäß Figur 6,
- Fig. 8: eine vergrößerte Ausschnittsdarstellung im Bereich einer Auftragsvorrichtung für die Kunststoffreaktionsmasse vor der Doppelplatten-Bandanlage,
- Fig. 9: eine Prinzipdarstellung gemäß dem Stand der Technik bei einer diskontinuierlichen Herstellung von Sandwichelementen aus einzelnen Blechabschnitten,
- Fig. 10: eine dem Stand der Technik entsprechende Gruppe von zu einer Decklage aneinandergereihten und in eine Aufnahmeform einlegbaren Blechabschnitte,
- Fig. 11: eine Prinzipdarstellung der in einer unteren und einer oberen Aufnahmeform einer Presse eingelegten Deckschichten aus Blechabschnitten gemäß Fig. 10,
- Fig. 12: eine Prinzipdarstellung des Kunststoffschaumauftrages auf die in der Form befindliche untere Deckschicht gemäß Fig. 11 und
- Fig. 13: eine vergrößerte Darstellung des Auftrages der Kunststoffreaktionsmasse ähnlich Fig. 12.

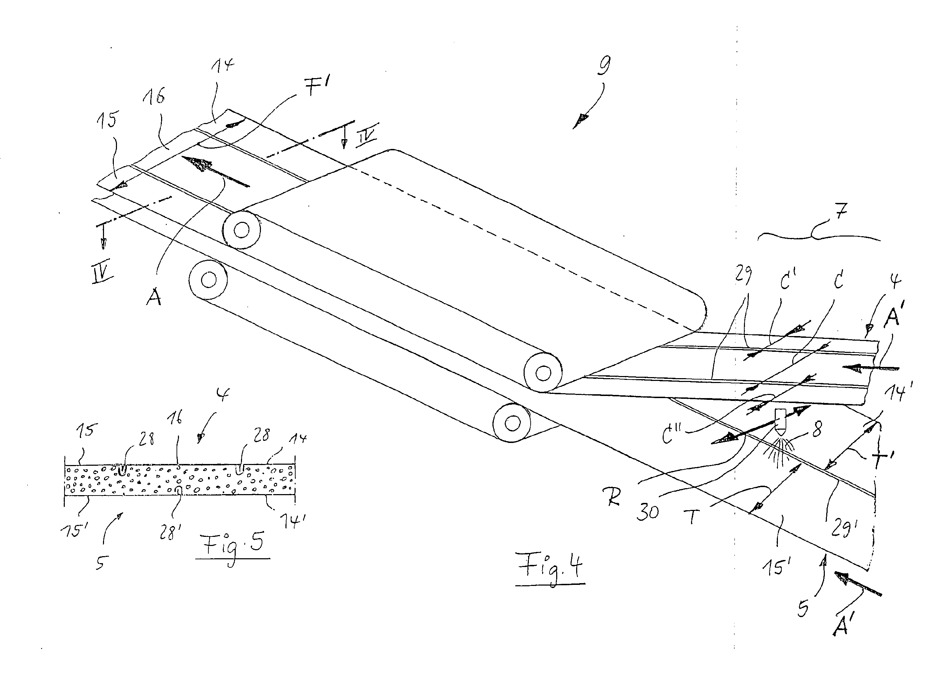

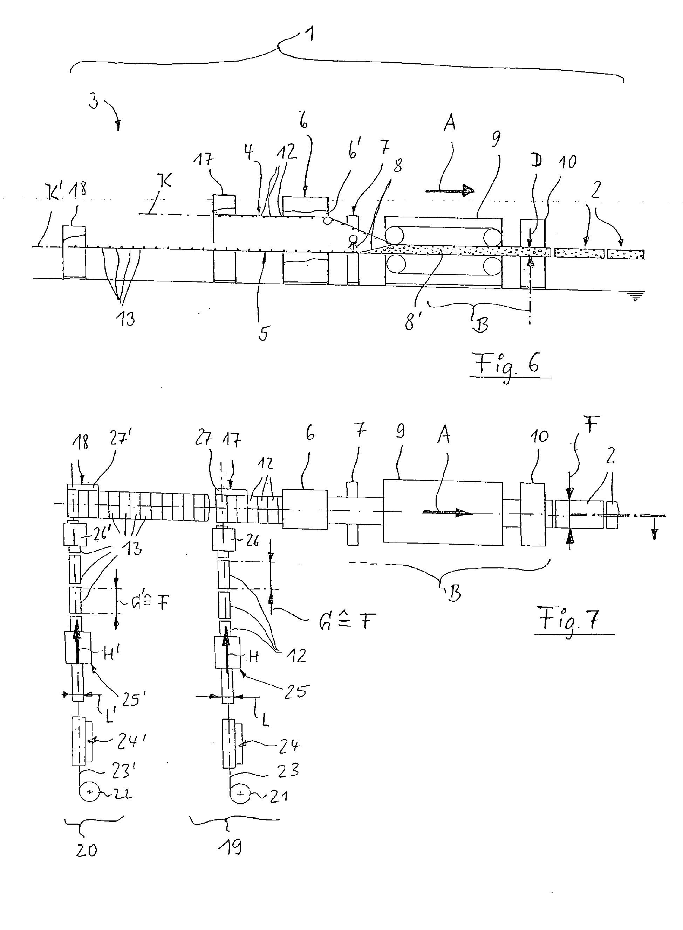

In Fig. 6 ist eine insgesamt mit 1 bezeichneter Einrichtung zur Herstellung von Sandwichelementen 2 dargestellt, wobei diese Einrichtung 1 als automatische Anlage eine nicht näher dargestellte Förderanlage 3 aufweist, mit der jeweilige eine obere 4 und eine untere Deckschicht 5 (Fig. 2, Fig. 5) des Sandwichelementes 2 bildende Stahlbleche als das Sandwichelement 2 als ebenes Flächentragwerk aussteifende Teile zuführbar sind.

Die beiden Deckschichten 4, 5 werden bei bekannten Anlagen im Bereich der eingangsseitigen Förderanlage 3 über eine nicht näher dargestellte Profilierstation einer an diese anschließenden Vorwärmstrecke 6 zugeführt. An deren Ausgang 6' werden die Deckschichten 4, 5 zusammengeführt und in den Bereich einer Auftragvorrichtung 7 verlagert, in der zwischen die beiden Deckschichten 4, 5 eine Kunststoffreaktionsmasse 8 eingebracht wird. Ausgehend von diesem Auftragbereich wird das nun durch die Ausschäumung der Reaktionsmasse 8 mehrlagige Halbzeug durch kontinuierlichen Vorschub in einer eine Längsrichtung A des Verfahrensablaufs definierenden Bewegungsrichtung in eine Doppelplatten-Bandanlage 9 eingeführt. In dieser wird mittels der sich verbindenden Lagen 4, 5, 8' ein bereits die Fertigteildicke D aufweisendes Sandwich-Band B erzeugt, das durch die innere Verklebung des Kunststoffs 8' mit den beiden Deckschichten 4, 5 ausgesteift und am Ende der Doppelplatten-Bandanlage 9 ausgefördert wird. In diesem Bereich wird das Sandwich-Band B einer Querteilvorrichtung 10 zugeführt und in deren Bereich durch Querteilung des Sandwich-Bandes B eine Vielzahl einzelner Sandwichelemente 2 erzeugt. Diese sind im Bereich einer nicht näher dargestellten Abführvorrichtung entnehmbar.

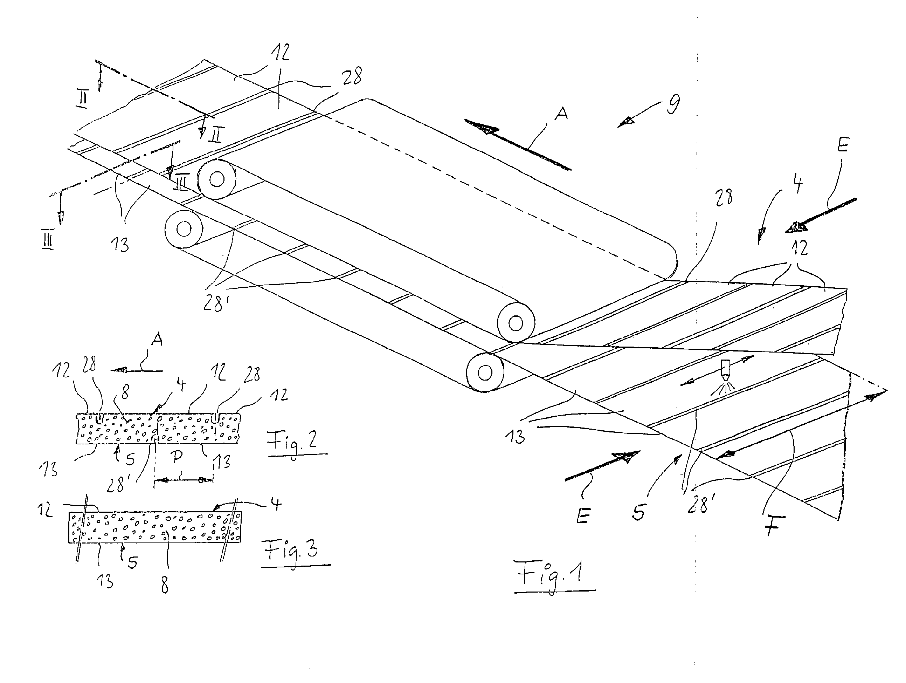

Bei dem erfindungsgemäßen Verfahren ist eine vor dem Einbringen der Kunststoffreaktionsmasse 8 in den kontinuierlichen Ablauf integrierte Herstellungsphase vorgesehen, in der das gesamte System an variierbare Breiten F, F' (Fig. 4, Fig. 7) von insbesondere großflächigen Sandwichelementen 2 (Fig. 7) angepaßt werden kann. Dabei ist vorgesehen, daß eine Modifikation des Verfahrens bzw. der dazu vorgesehenen Einrichtung 1 dahingehend erfolgt, daß die beiden kontinuierlich in Längsrichtung A verlagerbaren Deckschichten 4, 5 erst in einer verfahrensintegriert vorgelagerten Vorbereitungsphase bereitgestellt werden, derart, daß jeweils aus nacheinander in einer Querrichtung E fortlaufend zugeführten und längs zusammengefügten Blechabschnitten 12 bzw. 13 (Fig. 1) oder zumindest zwei in der Längsrichtung A' fortlaufend zugeführten und quer zusammengefügten Blechbändern 14, 15, 16 (Fig. 4) die beiden Deckschichten 4, 5 erzeugt werden.

In denkbaren Verfahrensvariationen ist vorgesehen, daß die obere Deckschicht 4 aus den in Längsrichtung A' zusammengeführten sowie dabei verbundenen Blechbändern 14, 15, 16 (Fig. 4) und die untere Deckschicht 5 aus den quer in Richtung E zusammengeführten sowie dabei verbundenen Blechabschnitten 12 oder 13 gebildet wird. In Umkehr dieser Lagenbildung sind auch Sandwichelemente 2 denkbar, bei denen Deckschicht 4 aus den quer verbundenen Blechabschnitten 12 oder 13 und die untere Deckschicht 5 aus den längsverbundenen Blechbändern 13, 14, 15 geformt wird (nicht dargestellt).

Mit der vorbeschriebenen Vorbereitungsphase im Verfahrensablauf wird mittels der eine wählbare Länge G, G' (entsprechend F, Fig. 7) aufweisenden Blechabschnitte 12, 13 bzw. der eine wählbare Breite C, C', C" bzw. T, T' aufweisenden Blechbänder 14, 15, 16 bzw. 14', 15' die jeweilige Breite F' des bandförmigen Sandwich-Halbzeuges B variabel vorgegeben. Nach Durchlaufen der Doppelplatten-Bandanlage 9 werden damit insgesamt nach einem kontinuierlichen Fertigungsablauf jeweilige Sandwichelemente 2 bereitgestellt, die durch ihre variable Breite F, F' in großflächiger Ausführung kundenspezifisch erzeugt werden können. Da die verfahrensmäßige Vorbereitung der Blechabschnitte bzw. Blechbänder nur einen geringen Umstellungsaufwand erfordert, ist eine Variation der Abmessungen der Sandwichelemente 2 mit geringem Aufwand durchführbar. Damit kann auf veränderte Stückzahlen und Marktsituationen vorteilhaft schnell reagiert werden.

Die Zusammenschau von Figuren 6 und 7 verdeutlicht, daß bei der Verarbeitung der Blechabschnitte 12 und 13, im Bereich vor der Vorwärmstrecke 6 eine jeweilige Verbindungsvorrichtung 17 bzw. 18 vorgesehen ist, in deren Bereich die beiden Deckschichten 4, 5 der für die Doppelplatten-Bandanlage 9 verarbeitbaren Bandbreite F (entspricht Länge G, G') zusammengeführt werden. Dazu sind die jeweiligen Blechabschnitte 12, 13 der beiden Deckschichten 4, 5 in einer jeweiligen Vorbereitungsstation 19, 20 herstellbar. Diese weisen eine Hauptarbeitsrichtung H bzw. H' auf, die jeweils senkrecht zur Längsrichtung A der Anlage 9 ausgerichtet ist und damit der Querrichtung E (Fig. 1) entspricht.

Diese beiden parallelen Vorbereitungsstationen 19, 20 sind jeweils mit einer ein von einem Coil 21, 22 ablaufendes Blechband 23, 23' randseitig umformenden Profilierungsvorrichtung 24, 24' versehen, an die eine die Blechabschnitte 12, 13 erzeugende Trennvorrichtung, beispielsweise eine Säge 25, 25', anschließt. Ausgehend von dieser Trennvorrichtung werden die Blechabschnitte 12, 13 zum Boden parallel in Richtung H, H' zu einer Einschubvorrichtung 26, 26' hin verlagert und von dieser ausgehend in die als eine Bördelvorrichtung 27, 27' ausgebildete Verbindungsvorrichtung 17, 18 eingeführt. In dieser kontinuierlichen Verfahrensphase ist vorgesehen, daß die Bördelvorrichtung 27, 27' jeweilige beim Bördelvorgang in Längsrichtung A der Anlage 9 mitführbare und in ihre jeweilige Ausgangsstellung rückführbare Bördelwerkzeuge aufweist (nicht dargestellt).

In Fig. 6 wird deutlich, daß die rechtwinklig zur Längsrichtung A des Sandwich-Bandes zugeführten Blechabschnitte 12, 13 der beiden Deckschichten 4, 5 in einer oberen und einer unteren Zuführebene K, K' horizontal parallel verlagert und in die Bördelstationen 27, 27' eingeführt werden. Die Zusammenschau mit der Schnittdarstellung gemäß Fig. 2 zeigt, daß die Blechabschnitte 12, 13 der beiden Deckschichten 4, 5 in Längsrichtung A versetzt angeordnet sein können (Abstand P), derart, daß das fertige Sandwichelement 2 insbesondere versetzt zu einander verlaufende Bördelnähte 28, 28' aufweist. Durch diesen Versatz P der Bördelnähte 28, 28' sind Zonen mit erhöhter Bruchneigung innerhalb des Flächentragwerkes vermieden.

Die beiden Blechbänder 23, 23' weisen in der dargestellten Ausführung gleiche Blechbreiten L, L' auf. Denkbar sind dabei auch unterschiedliche Breiten, insbesondere die Standardbreiten 1000 mm, 1250 mm oder 1500 mm, so daß entsprechend preiswerte Coil-Abmessungen vorliegen oder für die obere und die untere Deckschicht 4, 5 unterschiedliche Breiten eingesetzt werden.

In Fig. 4 und 5 sind die Verfahrensbedingungen bei der zweiten Variante Herstellung des Sandwichelementes 2 aus den zumindest zwei Blechbändern 14, 15, 16 in einer Prinzipdarstellung veranschaulicht. Dabei wird deutlich, daß diese in Längsrichtung A' zu den jeweiligen Deckschichten 4, 5 verbundenen Blechbänder 14, 15, 16 bzw. 14', 15' ebenfalls von nicht näher dargestellten Vorrats-Coils abrollbar sind und im Bereich einer nicht näher dargestellten Verbindungsvorrichtung durch Bördelnähte 29, 29' die Deckschichten 4, 5 entsprechender Breite F' aus den Band-Breiten C, C', C" bzw. T, T' verbunden werden. Die untere Deckschicht 5 ist dabei aus zwei gleiche Breite T und T' aufweisenden Blechbändern gefertigt. Ebenso ist denkbar, daß die Deckschichten 4, 5 aus mehr als den zwei bzw. drei dargestellten Blechbändern 14, 15, 16 aufgebaut werden und diese mit entsprechender Standard-Coil-Breite eine rationelle Fertigung ermöglichen.

Für beide Verfahrensvarianten ist denkbar, die beiden Deckschichten 4, 5 in einer variierbaren Breite F, F' von mehr als ca. 1,5 m bis ca. 4,00 m oder größer bereitzustellen und dabei die einzelnen Bearbeitungsstationen der Einrichtung 1 entsprechend anzupassen. Durch entsprechende Schnittlängen im Bereich der Vorrichtung 10 ist denkbar, mit dem beschriebenen kontinuierlichen Verfahren Plattengrößen von beispielsweise ca. 3,20 m Breite und ca. 20 m Länge zu realisieren.

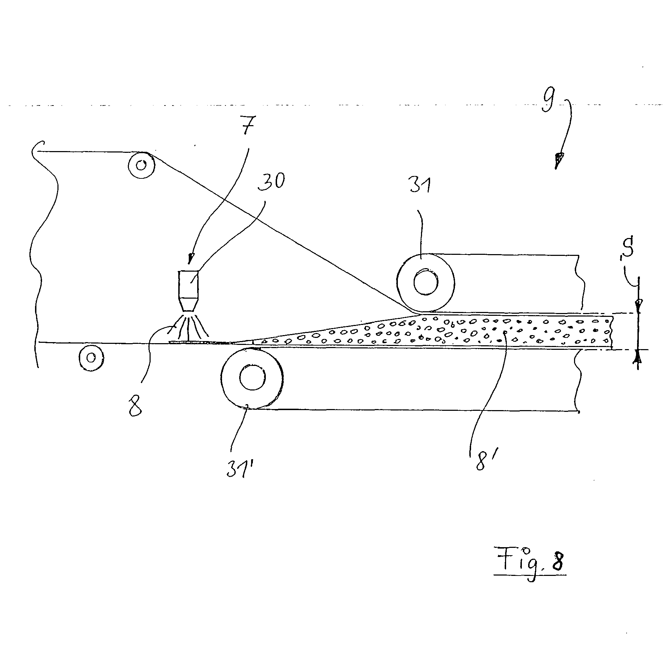

In Fig. 8 ist in einer vergrößerten Ausschnittsdarstellung die für den Kunststoffauftrag 8 vorgesehene Auftragsvorrichtung 7 dargestellt, wobei diese einen an sich bekannten Gießkopf 30 aufweist, der in einer Querrichtung (Pfeil R, Fig. 4) so verlagerbar ist, daß ein hinreichender Auftrag von Kunststoffreaktionsmasse 8 erfolgt. Dieser Schaum 8' füllt beim vertikalen und horizontalen Aufschäumvorgang einen durch entsprechende Rollengegenhalter 31, 31' definierten Zwischenraum S zwischen den beiden Decklagen 4 und 5 vollständig aus, so daß eine optimale Verklebung an den Innenseiten der beiden Deckschichten 4, 5 bewirkt ist.

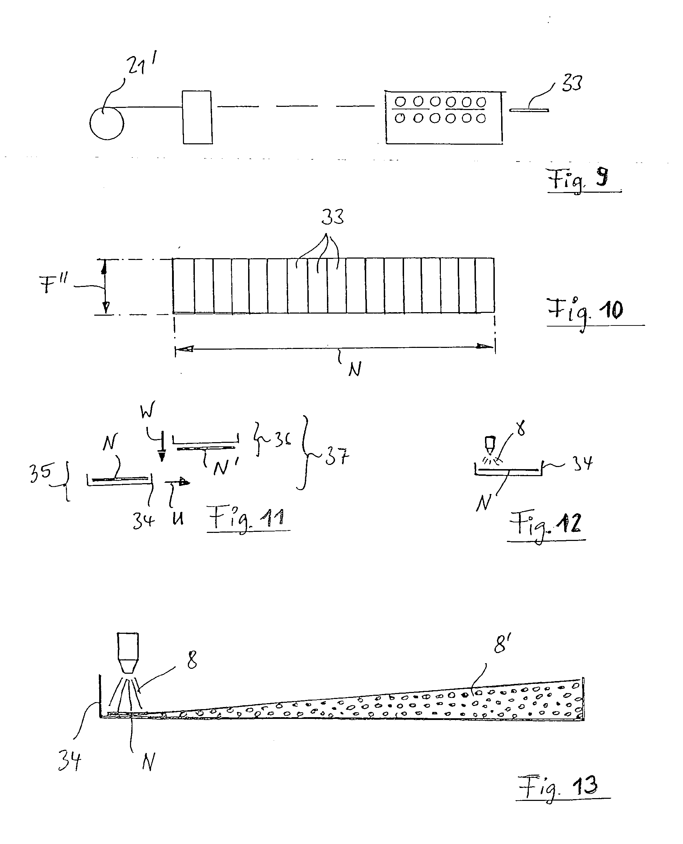

In Fig. 9 bis 13 ist zum Vergleich mit der erfindungsgemäßen Verfahrensführung ein im Stand der Technik vorgesehener Verfahrensablauf prinzipiell veranschaulicht. Bei dieser diskontinuierlichen Herstellung von Sandwichplatten werden ausgehend von dem in Fig. 9 ersichtlichen Coil 21' einzelne profilierte Blechabschnitte 33 gefertigt und diese gestapelt. Diese eine Länge F" definierenden Teile 33 werden danach in der in Fig. 10 dargestellten Reihenanordnung in beliebiger Länge N aneinandergefügt. Dieser damit erzeugte Halbzeug-Streifen N wird in eine gemäß Fig. 11 dargestellte Aufnahmeform 34 einer Preßplatte 35 aufgenommen und ein in seiner Größe entsprechend bemessener Streifen N' wird an einer oberen Preßplatte 36 festgelegt. Nach dem Auftrag der Kunststoffreaktionsmasse 8 (Fig. 12) werden die beiden Teile in der Presse 37 (Fig. 11) in Übereinanderlage verbracht (Pfeil U) und durch eine Absenkung (Pfeil W) der oberen Preßplatte 36 wird ein Sandwichelement einzeln fertiggestellt. In Fig. 13 ist das Einbringen der Kunststoffreaktionsmasse 8 in die untere Aufnahmeform 34 bzw. auf der unteren Deckschicht N dargestellt. Durch die stetig zunehmende Höhe der gebildeten Schaumschicht 8' ist dieser Vorgang nur mit hohem Aufwand beherrschbar, so daß bei diesen durch diskontinuierliche Fertigung erzeugten Platten die Qualität wesentlich von den hochwertigen Sandwichplatten 2 kontinuierlicher Fertigung (Fig. 6) abweicht.

Die erfindungsgemäßen Sandwichelemente 2 sind durch die Herstellung aus jeweiligen Deckschichten 4, 5 mit zumindest zwei Blechabschnitten 12, 13 oder Blechbändern 14, 15 besonders schwing- und biegesteif ausführbar und durch die kontinuierlich zwischen die beiden mehrteiligen Deckschichten 4, 5 eingebrachte Kunststoffreaktionsmasse 8 ist eine wesentliche Verbesserung der Gebrauchswerte am Fertigungsprodukt nachweisbar. Durch die kontinuierliche Zuführung der Kunststoffreaktionsmasse 8 wird diese als eine homogene Schaumschicht zwischen den beiden Deckschichten 4, 5 aufgebaut, wobei verfahrensbedingt durch eine schnelle Abbindung der Komponenten bei der Schaumbildung die homogene Struktur erreicht ist.

Diese flächendeckende Beschichtung der beiden Lagen 4 und 5 im Bereich der Schaumstoff-Zwischenlage ist am Fertigprodukt durch eine Vergleichmäßigung von Druckfestigkeit, Zugfestigkeit und Haftung nachweisbar, wobei über die Fläche des Sandwichelementes 2 verteilte Messungen an sämtlichen Meßpunkten durch im wesentlichen übereinstimmende Meßwerte den Homogenitätsnachweis erbringen. Daraus resultieren verbesserte Gebrauchseigenschaften, die insbesondere im Vergleich mit den diskontinuierlich hergestellten Sandwichelementen (Fig. 9 bis 13) deutlich werden, bei denen eine grob verteilte Schaumbildung im Bereich der diskontinuierlich aufzutragenden Kunststoffreaktionsmasse am Fertigprodukt zu punktuell streuenden Meßwerten führt. Diese Kennwerte sind beim erfindungsgemäßen Sandwichelement 2 fertigungstechnisch so beeinflußt, daß diese mit vorteilhaft verbesserten Gebrauchseigenschaften für den Abnehmer bereitgestellt werden.

## Patentansprüche

1. Verfahren zur Herstellung von Sandwichelementen o. dgl. mehrlagiger Bauplatten, wobei zwischen eine obere und eine untere Deckschicht (4, 5) aus insbesondere gewalztem Blech eine eine Schaumstoff-Zwischenlage bildende Kunststoffreaktionsmasse (8) eingebracht, das damit mehrlagige Halbzeug unter kontinuierlichem Vorschub (A) in eine die Längsrichtung des Verfahrensablaufs vorgebende Doppelplatten-Bandanlage (9) eingeführt, dabei mit den sich verbindenden Lagen (4, 5, 8) ein Sandwich-Band (B) geformt und von diesem nach dem Aushärten der Zwischenlage (8) ein die vorgesehene Länge aufweisendes Sandwichelemente (2) durch eine Quertrennung abgeteilt wird, **dadurch gekennzeichnet, daß** in einer vor dem Einbringen der Kunststoffreaktionsmasse (8) in den kontinuierlichen Ablauf integrierten Herstellungsphase jeweilige in einer Querrichtung (E) nacheinander zusammengefügte Blechabschnitte (12, 13) oder zumindest zwei in der Längsrichtung (A') fortlaufend zusammengefügte Blechbänder (14, 15, 16; 14', 15') zur kontinuierlichen Bildung der jeweils zwei in Längsrichtung (A) verlagerbaren Deckschichten (4, 5) bereitgestellt werden.

2. Verfahren nach Anspruch 1, **dadurch gekennzeichnet, daß** die obere Deckschicht (4) aus den in Längsrichtung (A') zugeführten sowie dabei verbundenen Blechbändern und die untere Deckschicht (5) aus den quer (E) zugeführten sowie verbundenen Blechabschnitten gebildet wird.

3. Verfahren nach Anspruch 1, **dadurch gekennzeichnet, daß** die obere Deckschicht (4) aus den quer verbundenen Blechabschnitten und die untere Deckschicht (5) aus den längs verbundenen Blechbändern geformt wird.

4. Verfahren nach einem der Ansprüche 1 bis 3, **dadurch gekennzeichnet, daß** mit der Länge (G, G') der Blechabschnitte und/oder der Breite (C, C', C") der Blechbänder die jeweilige Breite des bandförmigen Sandwich-Halbzeuges (B) variabel vorgegeben wird, derart, daß in einem durchgehend kontinuierlichen Fertigungsablauf nach der Quertrennung jeweilige großflächige Sandwichelemente (2) erzeugt werden.

5. Verfahren nach einem der Ansprüche 1 bis 4, **dadurch gekennzeichnet, daß** die zumindest eine der Deckschichten (4, 5) bildenden Blechabschnitte (12, 13) von einem Vorrats-Coil abgetrennt (21, 22), nach einer Profilierung der Längsseitenränder in den Bereich einer Bördelstation (27, 27') verlagert und in dieser die kontinuierlich zugeführten Blechabschnitte vor dem Erreichen einer Vorwärmstation (6) formschlüssig verbunden werden.

6. Verfahren nach Anspruch 5, **dadurch gekennzeichnet, daß** die Blechabschnitte (12, 13) jeweils rechtwinklig zur Längsrichtung (A) des Sandwich-Bandes (B) zugefügt und in der Bördelstation (27, 27') zu einer Reihe verbunden werden.

7. Verfahren nach Anspruch 5 oder 6, **dadurch gekennzeichnet, daß** die Blechabschnitte (12, 13) beider Deckschichten (4, 5) in einer oberen und unteren Zuführebene (K, K') parallel verlagert und in einer jeweiligen Bördelstation (27, 27') verbunden werden.

8. Verfahren nach Anspruch 7, **dadurch gekennzeichnet, daß** die jeweiligen Verbindungsebenen der Bördelstationen in Längsrichtung (A) des Sandwich-Bandes (B) versetzt angeordnet werden, derart, daß die Bördelnähte der beiden Deckschichten (4, 5) mittig versetzt sind.

9. Verfahren nach einem der Ansprüche 1 bis 4, **dadurch gekennzeichnet, daß** die in Längsrichtung (A') zu den jeweiligen Deckschichten (4, 5) verbundenen Blechbänder (14, 15, 16; 14', 15') von jeweiligen Vorrats-Coils unterschiedlicher Breite in Längsrichtung (A) der Anlage (1) zugeführt werden.

10. Verfahren nach Anspruch 9, **dadurch gekennzeichnet, daß** die Deckschicht jeweils aus einem Mittelband (16) und zwei dieses begrenzenden schmaleren Außenbändern (14, 15) geformt wird.

11. Verfahren nach einem der Ansprüche 1 bis 10, **dadurch gekennzeichnet, daß** die beiden Deckschichten (4, 5) in einer variierbaren Breite (F, F') von mehr als ca. 1,50 m bis ca. 3,00 m oder größer bereitgestellt werden.

12. Einrichtung zur Herstellung von Sandwichelementen (2) oder dgl. mehrlagiger Bauplatten, mit einer eine obere und eine untere Deckschicht (4, 5) insbesondere aus Blech zuführende Förderanlage (3) mit einer Profilierstation, eine an diese anschließende Vorwärmstrecke (6), einer Auftragvorrichtung (7) für eine Kunststoffreaktionsmasse (8) und eine daran anschließende Doppelplatten-Bandanlage (9), an deren Ende das durch Verklebung des Kunststoffs verfestigte Sandwich-Band (B) einer Querteilvorrichtung (10) zuführbar und aus dieser die einzelnen Sandwichelemente (2) entnehmbar sind, **dadurch gekennzeichnet, daß** im Bereich vor der Vorwärmstrecke (6) eine die beiden Deckschichten (4, 5) jeweils aus Blechabschnitten (12, 13) und/oder Blechbändern (14, 15, 16; 14', 15') in einer für die Doppelplatten-Bandanlage (9) verarbeitbaren Bandbreite (F, F') zusammenführende Verbindungsvorrichtung (17, 18) vorgesehen ist.

13. Einrichtung nach Anspruch 12, **dadurch gekennzeichnet, daß** die Blechabschnitte (12, 13) beider Deckschichten (4, 5) in einer jeweiligen Vorbereitungsstation (19, 20) herstellbar sind, deren Hauptarbeitsrichtung (H, H') senkrecht zur Längsrichtung (A) der endseitig angeschlossenen Doppelplatten-Bandanlage (9) ausgebildet ist, wobei vor dieser im Bereich der als eine Bördelvorrichtung (27, 27') ausgebildeten Verbindungsstation (17, 18) die Blechabschnitte (12, 13) zuführbar sind.

14. Einrichtung nach Anspruch 12 oder 13, **dadurch gekennzeichnet, daß** die Vorbereitungsstationen (19, 20) jeweils eine das von einem Coil (21, 22) ablaufende Blechband randseitig umformende Profilierungsvorrichtung (24, 24'), eine Trennvorrichtung (25, 25') und eine die profilierten Blechabschnitte in die Bördelvorrichtung verlagernde Einschubvorrichtung (26, 26') aufweisen.

15. Einrichtung nach einem der Ansprüche 12 bis 14, **dadurch gekennzeichnet, daß** die Bördelvorrichtung (27, 27') jeweilige beim Bördeln in Längsrichtung (A) der Anlage (1) mitführbare und in eine Ausgangsstellung rückführbare Bördelwerkzeuge aufweist.

16. Einrichtung nach Anspruch 12, **dadurch gekennzeichnet, daß** die die Deckschicht (4, 5) bildenden Blechbänder (14, 15, 16; 14', 15') im Bereich der Verbindungsvorrichtung (17, 18) durch jeweilige in Längsrichtung (A) der Anlage (1) verlaufende Bördelnähte (28, 28') kontinuierlich verbindbar sind.

17. Sandwichelement o. dgl. mehrlagige Bauplatte, mit einer oberen und einer unteren Deckschicht (4, 5) sowie zumindest einer zwischen diesen befindlichen Schaumstoff-Zwischenlage, hergestellt nach einem oder mehreren der Ansprüche 1 bis 16, **dadurch gekennzeichnet, daß** die beiden jeweils aus zumindest zwei Blechabschnitten oder―bändern (12, 13; 14, 15) bestehenden Deckschichten (4, 5) durch eine kontinuierlich zwischen diese eingebrachte Kunststoffreaktionsmasse (8) verbunden sind.
